# EUROPEAN PATENT APPLICATION

(11) **EP 1 777 130 A1**
(43) Date of publication of application: **25.04.2007**
(21) Application number: 07002572.1
(22) Date of filing: 25.05.2000
(51) Int. Cl.: B60S 1/44

(54) **Method and device for wiping**

(30) Priority: 25.05.1999 JP 14547499
(62) Divisional of application: 00931558.1
(71) Applicant: Murakami, Toshio, Ichihara-shi, Chiba 290-0075 (JP)
(72) Inventor: Murakami, Toshio, Chiba 290-0075 (JP); Murakami, Takashi, Chiba 290-0075 (JP); Murakami, Kazuhiro, Chiba 290-0075 (JP)
(74) Representative: Möbus, Steffen

(57) **Abstract**

This invention uses two sorts of wipers, the both-way rocking formula wiper 1 and the rotation formula wiper 4. The both-way rocking formula wiper is operated at the time of the usual rainfall, wipes away rain, and at the time of the rainfall which exceeds the limit of the eradication capability of the above-mentioned both-way rocking formula wiper, after stopping the above-mentioned both-way rocking formula wiper in a predetermined position, wiping rain away by operating a rotation formula wiper, and even when it rains violently in precipitation of 50mm or more, a driver's field of view can be secured good.

## Description

### TECHNICAL FIELD

This invention relates to the wiper methods, such as window glass for a car, a train, a ship, an airplane, or other vehicles, and the equipment of those.

### BACKGROUND ART

Conventionally, wiper equipment is known as equipment for carrying out eradication removal of rain, snow or dirt, etc. from the window glass in vehicles etc.
On the other hand, the rain strength, i.e., so-called rain intensity is classified into the following eight stages according to the precipitation per hour.

They are eight stages; "light rain" for less than 1mm, "weak rain" for 1mm or more less than 3mm, "rain" for 3mm or more less than 8mm, "a little strong rain" for 8mm or more less than 15mm, "strong rain" for 15mm or more less than 20mm, "the intense rain" of a heavy rain for 20mm or more less than 30mm, "the very intense rain" which falls like making a bucket upside-down for 30mm or more less than 50mm, and "Violent rain" which falls like a waterfall for 50mm or more ["The Pleasant Rain Talk", author: Minoru Harada, issue: Japan Books Publication Meeting Inc., June 20, 1997].

And the wiper equipment used for the car etc. is generally a both-way common rocking formula wiper, and to usual rain for less than 50mm of precipitation, it can wipe away window glass with a sufficient function, and can secure a good field of view.

However, in the case of "the violent rain" to which precipitation comes down like a waterfall 50mm or more, even if a both-way rocking formula wiper wipes away the rain, the violent rain may fall on window glass one after another, the degree of fluoroscopy may fall, and reservation of a field of view may become difficult.

Especially, in the highway run, it cannot stop, either, but though it has a feeling of fear, it is the situation of being forced operation by reliance on "intuition."
Furthermore, the present condition is not yet solved although there is desire of becoming a much more serious situation and wanting you to solve such a problem in night.

On the other hand, "the violent rain" which falls like a waterfall is often generated, in connection with passage of a low pressure, the circumference of a seasonal rain front or an autumnal rain front, and the tropical cyclones (a typhoon, hurricane, cyclone, etc.), or as Toast in the Torrid Zone and a subtropical district.
It is one of the basic functions of a car etc. to secure a driver's field of view, and "reservation of a field of view" is requirements indispensable to prevent a traffic accident, to raise safety and to removes a driver's uneasiness under any unfavorable conditions.

Until now, the rotation formula wiper, the compressed air injection formula wiper, etc. are proposed as a wiper replaced with a both-way rocking formula wiper.
It is already well-known technology about the eradication method wiper itself of window glass with these rotation formula wipers or a compressed air injection formula wiper itself.

As a rotation formula wiper, for example, the rotation formula window wiper that rotates a eradication pestle at high speed is indicated in a Tokkoushou 47-165 official report, the rotation formula window cleaner of which a half of the eradication object to rotate is on a glass side and other half is located in a bonnet is indicated in Tokkoushou 48-13019 and Tokkoushou 48-42142 official reports, the rotation rocking combined use formula window glass wiper which carries out rocking movement at right and left while rotating is indicated in a Tokkoushou 47-21043 official report, the window wiper that rotates a brush eradication child is indicated in Tokkoushou 50-24502 and Tokkoushou 50-39293 official reports, the rotation formula window cleaner that makes an eradication object go up and down is indicated in a Tokkouhei 3-60698 official report, and the rotation formula window cleaner which gave the delay angle so that the eradication object of the right and left which carry out rotation eradication might not carry out mutual interference is indicated in a Tokkouhei 7-39264 official report.

As a compressed air injection formula wiper, for example, automobile windshield protection equipment which forms air curtain is indicated in a Tokkaishou 48-15239 official report, the air wiper which spouts compressed air is indicated in a Tokkoushou 52-24293 official report, the air wiper for cars which forms double air curtain with pressurization air is indicated in Tokkouhei 01-50619 and Tokkouhei 01-50620 official reports, the air injection formula wiper which forms a high-speed jet stream film one after another is indicated in a Tokkaihei 03-248948 official report, raindrop removal equipment from which a both-way rocking formula wiper and a compressed air injection formula wiper are used together, and the raindrop which is not wiped away according to a both-way rocking formula wiper is removed by air injection is indicated in a Tokkaihei 04-90948 official report, the air wiper for vehicles which forms two or more air curtain by compressed air injection is indicated in a Tokkaihei 06-156204 official report, the air wiper which inject water repellent and compressed air and water repellent coating equipment is indicated in a Tokkaihei 07-52755 official report, and the non-wiper car which is made to form the coat of silicone resine in a windshield and injects pressurization air is indicated in a Tokkaihei 10-147214 official report.

The both-way rocking formula wiper generally used has the big problem that when violent rain which precipitation is 50mm or more per hour, the limit of eradication capability is exceeded, Even though a both-way rocking formula wiper wipes away, rain violent falls on window glass one after another, the degree of fluoroscopy falls down, and a field of view cannot secure at all.

Moreover, if it is in a rotation formula wiper, although it is devised as equipment which replaces each with a both-way rocking formula wiper, a rotation formula wiper has the fault that eradication area becomes narrow inevitably compared with a both-way rocking formula wiper.

And if rotation eradication of the window glass side which has complicated curvature is carried out, it will be expected easily that unevenly eradication arises and it will be expected that this unevenly eradication becomes still larger in order that centrifugal force may act so that number of rotations is raised.

Moreover, these rotation formula wipers are not what meant the eradication effect over violent rain, and the proof of an effect opposed to precipitation in each of above-mentioned technology is not made further.
Therefore, such technology can be called notional thing and generally a rotation formula wiper has not come to spread.

The proof of an effect as opposed to precipitation in each technology mentioned above is not made.
Then, this inventor etc. actually injected compressed air on window glass and checked about the effect of blowing away of rain.

Namely, they injected compressed air of 0.5 MPa (5 Kg/cm²) on window glass with 200-400 L/min of flux per nozzle or 20-30 m/sec (72-108 km/hr) of wind velocity using as injection nozzle; (1): The air duster which attached the nozzle with a caliber of 2.0mm, (2): The air duster which attached the nozzle which breathes out the output air of 3 times or more of input air, (3) and (4): The nozzle of the multi-orifice structure where 16 pieces of injection mouth are provided in parallel in a width of 47.5mm and which caliber is 0.8mm and 1.1mm [wind jet blow off nozzle manufactured by Spraying Systems Japan Inc.], and checked the effect of blowing away of rain.

Consequently, effects of precipitation having blown away rain also on condition that any of less than 50mm usual rain or violent rain 50mm or more, and securing a field of view were little accepted.
Only about the narrow range which compressed air hit slightly, the degree of fluoroscopy improved, and could fade and be seen. Moreover, although devised about an injection angle, injection distance, etc., the big improvement effect was not accepted.

On the other hand, when water repellent (Glaco by SOFT99 Corporation) of a silicone system was applied and compressed air was injected, it turns out that an effect a raindrop blows away is improved greatly, the degree of fluoroscopy improves, and a field of view can be secured.

However, since a compressed air injection formula wiper always needs to use water repellent together, and since the air compressor of very big capability is needed in order to inject compressed air all over window glass and to secure a field of view, it is thought that utilization of a compressed air injection formula wiper is difficult.

This invention was made in view of the problem in such conventional technology, and the main purpose is securing a driver's field of view good, even when violent rain of the precipitation is 50mm or more.

### DISCLOSURE OF INVENTION

This invention is to use two sorts of wipers, a both-way rocking formula wiper and a rotation formula wiper, and to make rain wiped away by operating the both-way rocking formula wiper at the time of the usual rainfall, and to make rain wiped away by operating a rotation formula wiper after stopping the above-mentioned both-way rocking formula wiper in a predetermined position, at the time of the rainfall exceeded in the limit of the eradication capability of the above-mentioned both-way rocking formula wiper.

Thus, even if window glass has complicated curvature, by using the eradication object of a moderate size required to secure a field of view and rotating at a predetermined rotation speed, violent rain can be removed from window glass, the degree of fluoroscopy can be raised, and a field of view can be secured.

As a size of an eradication object, 100-500 mm is desirable, 100-400 mm is more desirable, and 100-300 mm is still more desirable.

Moreover, as a rotation speed, that should necessarily be just 80 or more rpm, 100-2000 rpm is desirable, 120-1500 rpm is more desirable, and 140-1000rpm is still more desirable.

Furthermore, as the number of times of eradication, 200-4000 times is desirable in 1 minute, 240-3000 times is more desirable, and 280-2000 times is still more desirable.

Although the drive of an eradication object is driven through a transfer axis etc. from the motor for a drive, this motor for a drive may be formed in wiper arm circles, may be formed in an engine room etc., and may be driven with means of communication, such as a transfer axis.

Although a means of communication will serve as a little complicated structure if it is prepared in an engine room, it is desirable also in design since it has the almost same appearance as a general both-way rocking formula wiper.
And at the time of fine weather, both a both-way rocking formula wiper and a rotation formula wiper are contained by the lower part of window glass, and if it is in the car which has a bonnet, they are contained in a bonnet.

The both-way rocking formula wiper is used in the case of usual rain, and only in the case of violent rain, the both-way rocking formula wiper is made to stop in the opened state, next the rotation formula wiper is made to rotate from the receipt position to the opened state and stop, and violent rain is removed by rotating the eradication object of a rotation formula wiper at high speed.

After violent rain passes away, rotation of the eradication object of a rotation formula wiper is stopped, and a wiper arm is rotated, it contains in a receipt position, and, next, a both-way rocking formula wiper is re-used.

Moreover, this invention uses the wiper which performs both-way rocking operation and rotation operation, makes rain wiped away by carrying out both-way rocking of the above-mentioned wiper at the time of the usual rainfall, by rotating the above-mentioned wiper at the time of the rainfall exceeding the limit of the eradication capability of the wiper by which both-way rocking is carried out.

At the time of fine weather, the above-mentioned wiper is contained in the lower part of window glass, and if it is in the car which has a bonnet, it is contained in a bonnet.

And in the case of usual rain, while fixing an eradication object in a predetermined position, connection of a drive means is intercepted, it is used as a both-way rocking formula wiper, and only in the case of violent rain, a wiper arm is made to stop where it is opened and violent rain is removed by canceling fixation of an eradication object, connecting a drive means and rotating an eradication object at high speed.

After violent rain passes away, while stopping rotation of an eradication object and fixing an eradication object to a predetermined position, connection of a drive means is intercepted, and it is re-used as a both-way rocking formula wiper.

If such a rotation formula wiper is used, even if it is window glass which has complicated curvature, by rotating an eradication object at a predetermined rotation speed, violent rain can be removed from window glass, the degree of fluoroscopy can be raised, and a field of view can be secured.

That is, although centrifugal force will act and unevenly eradication will arise in a circumference part if an eradication object is rotated at high speed when an eradication object is large, the field of view of the range which does not have trouble in operation in the central part is secured.

For this reason, although there is no restriction in the size of an eradication object, when an eradication object is large, a strong wiper arm and the more powerful motor for a drive are needed.

While an eradication object is driven through a transfer axis etc. from the motor for a drive, This motor for a drive may be provided in wiper arm portion, or may be provided in an engine room etc. and driven with means of communication, such as a transfer axis.

Although a means of communication will serve as a little complicated structure if it is provided in an engine room, it is desirable also in design from having the almost same appearance as a general both-way rocking formula wiper.

And, this invention, using a both-way rocking formula wiper, at the time of the rainfall exceeding the limit of the eradication capability at the time of the usual rainfall, makes the number of times of both-way rocking of the above-mentioned both-way rocking formula wiper increase above 80 times / min. Moreover, this invention decreases its both-way rocking range at the same time it increases the number of times of both-way rocking of a both-way rocking formula wiper above 80 times /min.

And a both-way rocking formula wiper has the motor for rotation, the slowdown machine for rotation, a linkage mechanism, a pivot axis, a wiper arm, and an eradication object as main composition parts for carrying out such a wiper method.

On the other hand, a rotation formula wiper has the motor for rotation, the slowdown machine for rotation, a linkage mechanism, a pivot axis, a wiper arm, the motor for a drive, the slowdown machine for a drive, a transfer axis, and an eradication object.

Thus, it is necessary to form two sorts of equipments, a both-way rocking formula wiper and a rotation formula wiper.

However, since operating frequency is low on a rotation formula wiper, the method, that these motors for rotation and the slowdown machine for rotation are provided in the empty spaces in an engine room etc., a linkage mechanism is connected to a pivot axis and the fixed link plate with a flexible cable, a wiper arm is rotated around, can be adopted.

By carrying out like this, it becomes possible to incorporate two sorts of wipers, a both-way rocking formula wiper and a rotation formula wiper, in the limited space.

On the other hand, control of the receipt position of a wiper arm and the stop position in opening state is controlled by the automatic-stay position switch which is used with the conventional both-way rocking formula wiper and which was formed in the slowdown inside of a plane.

That is, while controlling a stop in the receipt state by the same automatic-stay position switch as the former, it controls by newly providing the automatic-stay position switch for opening state in the symmetrical position of 180 degrees of it.
Moreover, control of the stop position of an eradication object is controlled by providing an automatic-stay position switch in the slowdown machine for a drive.

As the variable means of the number of times of both-way rocking, the method of carrying out variable of the slowdown ratio of the slowdown machine for rotation or the method of carrying out variable of the number of rotations of the motor for rotation are considerable.

As a transmission which carries out variable of the slowdown ratio, although all are well-known technology, a gear slowdown machine, a friction vehicle type gearless drive mechanism, a belt formula gearless drive mechanism, a chain formula gearless drive mechanism, a fluid transmission, etc. are mentioned. However, since structure of these transmissions comes complicated and expensive, the method of making variable of the number of rotations of a motor is more desirable.

The rotation speed of a direct-current motor is proportional to armature induce electromotive voltage, and in inverse proportion to field of magnetic flux. The speed control has many Wiping methods, such as the electric child voltage controlling method, the field controlling method, and the resistance controlling method, (for example, (1) new edition motor practical use manual, written by Shigehiko Tuboshima, Teruzou Nakamura, Ohm-Sha Ltd. Issue, December 10, Heisei 8, (2) motor application circuit 101, written by Kinji Tanikoshi work, the Nikkan Kogyo Shimbun Ltd. issue, May 29, 1992).

When in-variable-speed ranges are 1:3 - 1:10, it can be controled easily by fluctuating field current or changing in-series resistance, and in wide range speed control, the method of controlling electric child voltage is desirable.
In addition, the number of times of both-way rocking of the both-way rocking formula wiper currently generally used is 50 times / min at low speed (Lo) and 72 times / min at at high speed (Hi), and the number of times of eradication is 100 and 144 times / min and twice as many as it, respectively.

For this reason, it is necessary to make increase the number of times of both-way rocking in this both-way rocking formula wiper, 80 times / min or more, more preferably, 140 times or more, therefore the difficulty that a both-way rocking speed becomes high-speed inevitably arises.

When it becomes high-speed, the inertia action which works on a wiper arm becomes still larger, and strengthening of the adherence part of a wiper arm and a pivot axis and the check of the durability of a wiper style are needed.

In this invention, although a both-way rocking speed is the same as the conventional both-way rocking formula wiper, the increase in the number of times of both-way rocking is enabled by decreasing the both-way rocking range.

That is, although a conventional both-way rocking speed, the inertia action which works on a wiper arm, etc. of it are the same as ones of a conventional both-way rocking formula wiper, the number of times of both-way rocking of it can be increased because the both-way rocking range decreased, therefore eradication removal of the violent rain is carried out from window glass.

The both-way rocking range of the both-way rocking formula wiper currently generally used is about 90 degrees as a rotation angle, the number of times of both-way rocking of it is 72 times at a high speed (Hi), and the number of times of eradication is 144 times.

If a both-way rocking speed is kept the same and a rotation angle is decreased at 45 degrees, the number of times of both-way rocking becomes 144 twice as many times as this and the number of times of eradication becomes 288 times. If a rotation angle is made into 30 degrees, the number of times of both-way rocking becomes 216 three times as many times as this and the number of times of eradication becomes 432 times.

Now, when a rotation angle is made into 45 degrees, although the both-way rocking range decreases, eradication of about 450mm square is possible in the central part, and when a rotation angle is made into 30 degrees, eradication of about 300mm square is possible in the central part.

For this reason, even if it decreases a rotation angle, sufficient field-of-view range which does not have trouble in operation is securable.

As a rotation angle, 10 - 90 degrees is desirable, 20 - 70 degrees is more desirable, and 30 - 50 degrees is still more desirable.

As the number of times of both-way rocking which necessarily should be more than 80 times / min, 100 - 1000 times / min is desirable, 120 - 600 times / min is more desirable, and 140 - 300 times / min is still more desirable.

That is, as the number of times of eradication, 200 - 2000 times / min is desirable, 240 - 1200 times / min is more desirable, and 280 - 600 times / min is still more desirable.

Moreover, some following methods can be considered as a method of decreasing the both-way rocking range.

One is the method of providing the inversion switch of a motor in the slowdown machine of the conventional both-way rocking formula wiper, and repeating the inversion of a motor and carrying out both-way rocking within the limits of predetermined.

However, the inversion of a motor must be repeated at high speed of 300 times / minor more, therefore it is thought that utilization is difficult.

The second is the method of shortening distance between the fulcrums of the crank arm currently interlocked with the slowdown machine of the motor for rotation.

The amplitude of reciprocating movement of a link rod becomes small by shortening, therefore the amplitude of reciprocating movement of the link plate which has been connected with the pivot axis also becomes small, and a rotation angle decreases.

However, there is a difficulty that structure becomes a little complicated for carrying out variable of the distance between the fulcrums of a revolving crank arm.

The third is the method of carrying out variable of the position of the connecting point of the link plate and link rod which have been connected with the pivot axis.

That is, the rotation angle of a wiper arm can be made small by making variable distance of center of a pivot axis and center of the above-mentioned connecting point, and lengthening it.

In order to make a rotation angle into 45 degrees from 90 degrees it is necessary to increase the distance between the centers 2.41 times, and to make it into 30 degrees it is necessary to increase it 3.73 times.

Making variable of the position of the connecting point of a link plate and a link rod can be carried out by using various actuators; for example, electric cylinder, air cylinder, oil pressure cylinder, electromagnetism solenoid, motor drive, etc.

That is, the connection axis can be carried out variable by transmitting directly the both-way operation of an electric cylinder etc. to it, or transmitting the both-way operation of the arm connected with the slowdown machine of a motor, with a flexible cable etc.

However, for a car (Toyota Corolla), the distance between the centers is 54mm, and it becomes 130 mm when increased 2.41 times, and 201mm when 3.73 times.

Therefore, this method has a problem that a quite large space is needed.

The fourth is the method of providing the reduction means for the amplitude of reciprocating movement at the middle of the link rod that connects the link plate and the crank arm.

It becomes possible by providing this reduction means to decrease reciprocating movement also in a small space.

That is, it is more preferable, because it can be installed also in the storage space of the conventional linkage mechanism and it is not accompanied by big design change of a body.

The method for this, for instance, there is the method of having a fulcrum in the central part of a thing like the seesaw laid down sideways, incorporating equipments which carries out amplitude into the right and left end of it, making the fulcrum of the central part variable, making the distance of the connecting point of a fulcrum and the rod of both ends variable, and reducing the amplitude of reciprocating movement.

Specifically, the method of moving a rod in the direction of straight side by rotation of a cam plate can be mentioned, and the method of moving the rack currently fixed to the rod in the direction of straight side by rotation of the pinion can be also considerable, moreover, the various actuators above mentioned can be used.

As other methods, the method of changing the combination ratio of the gears, or making amplitude variable with transmission, are possible, but these have the difficulty that the structure is complicated and the cost becomes high.

On the other hand, a both-way rocking speed falls when a rotation angle is decreased. That is, the number of times of both-way rocking, that is carried out by one rotation of the crank arm and equivalent to one round trip of a link rod, doesn't change even when a rotation angle decreases, therefore, the both-way rocking speed falls down.

Therefore, in order to keep a both-way rocking speed the same, it is necessary to make the number of rotations of the motor for rotation increase.

When decreasing a rotation angle at 45 degrees from 90 degrees, in order for a both-way rocking speed to fall to one half, it needs to increase the number of rotations of a motor twice, and when decreasing a rotation angle at 30 degrees, in order for a both-way rocking speed to fall to one third, it needs to increase the number of rotations of a motor three times.

The reduction means of both-way rocking range and the variable means of the number of times of both-way rocking may be performed as a separate mechanism as mentioned above, they can also be carried out by bundling up as one mechanism combining transmissions, actuators, etc.

Moreover, it is also possible that the reduction means of the both-way rocking range and the variable means of the number of times of both-way rocking are interlocked and changed at the same time, and they can be made variable as multi-steps according to the precipitation

### BRIEF DESCRIPTION OF THE DRAWINGS

Fig. 1 is an elevational view showing the 1st operation form of this invention.
Fig. 2 shows the 1st operation form of this invention, and is a longitudinal section of the principal part.
Fig. 3 shows the 2nd operation form of this invention, and is a longitudinal section of the principal part.
Fig. 4 is an elevational view showing the 4th operation form of this invention.
Fig. 5 is a longitudinal section of the principal part showing the 4th operation form of this invention.
Fig. 6 shows the 4th operation form of this invention, and is a longitudinal section showing the modification of the principal part.
Fig. 7 shows the 4th operation form of this invention, and is an outline view showing the modification of the principal part.
Fig. 8 shows the 4th operation form of this invention, and is a longitudinal section showing the modification of the principal part.
Fig. 9 shows the 4th operation form of this invention, and is a plane view of Fig. 8.
Fig. 10 is a longitudinal section showing the modification of further others of the 4th operation form of this invention.
Fig. 11 shows the 4th operation form of this invention, and is a plane view of Fig. 10.
Fig. 12 is a longitudinal section showing the modification of further others of the 4th operation form of this invention.
Fig. 13 shows the 4th operation form of this invention, and is a plane view of Fig. 12.
Fig. 14 is a Fig.ure showing the examination result of the example 1 of an examination.
Fig. 15 is a Fig.ure showing the examination result at the time of using a 300mm wiper braid in the example 2 of an examination.
Fig. 16 is a Fig.ure showing the examination result at the time of using a 500mm wiper braid in the example 2 of an examination.
Fig. 17 is a Fig.ure showing the examination result of the example 3 of an examination.

### BEST MODE FOR CARRYING OUT THE INVENTION

In order to explain this invention in detail, this is explained with reference to an appending drawing.

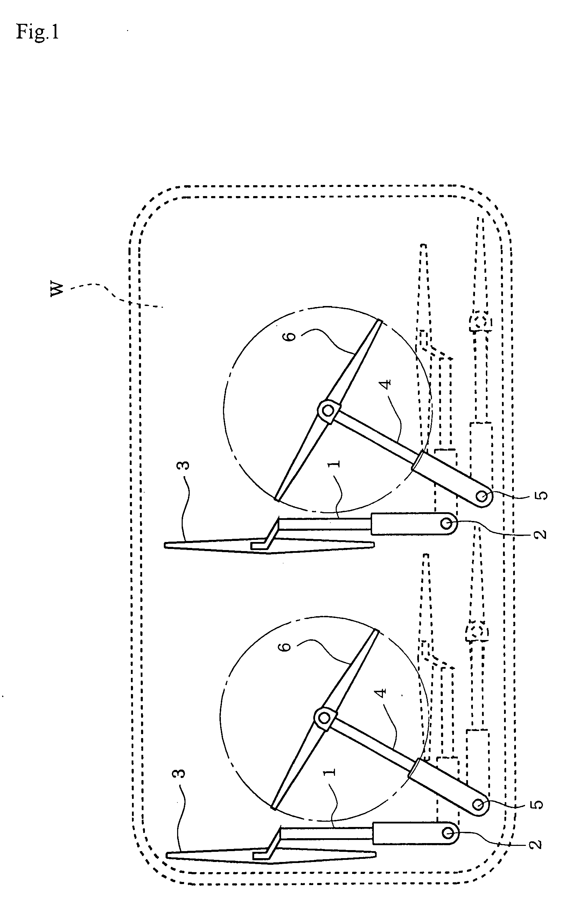

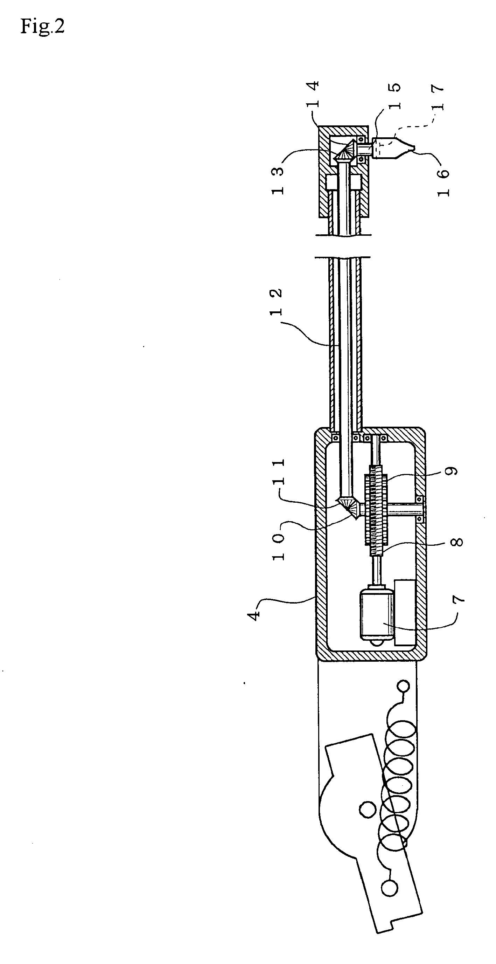

The 1st operation form of this invention is explained with reference to Fig. 1 and Fig. 2.

This operation form shows the wiper equipment which has two sorts of wipers, a both-way rocking formula wiper and a rotation formula wiper.

In these views, a mark 1 is the wiper arm of the both-way rocking formula wiper, which undergoes the output of the motor for rotation which is not illustrated, and rotates in the predetermined range centering on the pivot axis 2, and the eradication object 3 is held at the tip part of this wiper arm 1.

A mark 4 is the wiper arm of the rotation formula wiper, which undergoes the output of the motor for rotation which is not illustrated, which rotates in the predetermined range centering on the pivot axis 5, and the eradication object 6 is held rotation-free at the tip part of this wiper arm 4.

As shown in Fig. 2, the motor for a drive 7 as 1st drive means is formed in the hollow part of the above-mentioned wiper arm 4, and worm 8 is attached in the output axis of this motor 7 for a drive at one.

The worm wheel 9 attached rotation-free in the wiper arm 4 is meshed by this worm 8, and the umbrella gear 10 is fixed and provided on the same axle at one at this worm wheel 9, and the umbrella gear 11 which meshed with this umbrella gear 10 is fixed to the end of the power transfer axis 12 supported rotation-free in the above-mentioned wiper arm 4.

Moreover, the umbrella gear 13 is attached in the other ends of the above-mentioned power transfer axis 12 on the same axle at one, and the umbrella gear 14 which meshes with this umbrella gear 13 is formed in the inside of the tip of the above-mentioned wiper arm 4, is attached in the maintenance means 16 for attaching the above-mentioned eradication object 6, and it is fixed to the axis of rotation 15 as an axis which takes the rotation lead in the above-mentioned eradication object 6.

And this axis of rotation 15 and the maintenance means 16 are connected rotation-free with the bolt nut 17, and the eradication object 6 is held at the maintenance means 16 in which this rotation is free.

Moreover, in order to make an abbreviation level state suspend the above-mentioned eradication object 6 when the wiper arm 4 is contained, the position stop switch which is not illustrated on the above-mentioned worm wheel 9 is formed, and the gear ratio is constituted so that one rotation of the worm wheel 9 may be equivalent to one rotation of the eradication object 6.

Thus, on the wiper equipment of this constituted operation form, in the case of the usual rainfall, by making the wiper arm 1 which constitutes a both-way rocking formula wiper rock, it is a deed about rain eradication using the eradication object 3 with which this wiper arm 1 is equipped, and when the limit of the eradication capability of a both-way rocking formula wiper was exceeded with violent rain and reservation of a field of view becomes difficult, as shown in Fig. 1, after making it stop in the position which opened the both-way rocking formula wiper, by carrying out predetermined angle rotation of the wiper arm 4 of a rotation formula wiper, the above-mentioned eradication object 6 is moved to an eradication operation position, next, by driving the motor 7 for a drive, the eradication object 6 can be rotated at high speed, and eradication removal of the violent rain can be carried out from window glass W, and a field of view can be secured.

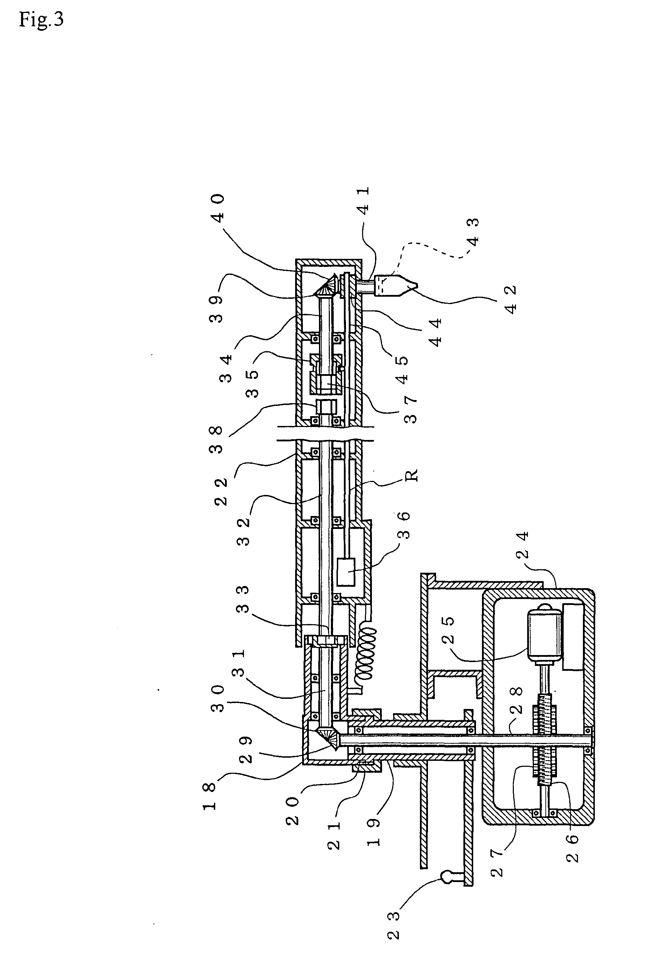

Subsequently, the 2nd operation form of this invention is explained with reference to Fig. 3.

In Fig. 3, a mark 18 is an arm head, fitting connection of the pivot axis 19 is carried out in the basis end of this arm head 18, relative rotation of these arm heads 18 and pivot axes 19 around line of the pivot axis 19 is restrained by the key (or spline) 20, and, the arm head 18 and the pivot axis 19 have the structure where secession was prevented by the bag nut 21 screwed on the above-mentioned arm head 18.

The rivet which is not illustrated connects the hollow-like wiper arm 22 to the other ends of the above-mentioned arm head 18, so that rocking of the hollow-like wiper arm 22 in the vertical direction (direction which intersects perpendicularly with the field of window glass W mostly) may be attained.

Moreover, the ball joint 23 is provided at the end of the above-mentioned pivot axis 19 contrary of a connection portion with the above-mentioned arm head 18, the motor (not illustrated) as 2nd drive means is connected with this ball joint 23, the above-mentioned pivot axis 19 is made to carry out both-way rotation of the predetermined range in response to the output of this motor, and by this, the arm head 18 and the wiper arm 22 are made to carry out both-way rocking on the window glass side which is not illustrated.

A mark 24 is for instance housing fixed to the body, the motor 25 for a drive as 2nd drive means is formed into this housing 24, and worm 26 is attached in the output axis of this motor 25 for a drive at one.

And while the worm wheel 27 which gears to this worm 26 is arranged in the inside of the above-mentioned housing 24, this worm wheel 27 is being fixed to the rotatable power transfer axis 28 which penetrated the above-mentioned housing 24 and the pivot axis 19, and be projected in the above-mentioned arm head 18.

Moreover, the umbrella gear 29 is fixed to the end located in the above-mentioned arm head 18 of the above-mentioned power transfer axis 28 by one, and the umbrella gear 30 which meshes with this umbrella gear 29 is being fixed to the end of the 2nd power transfer axis 31 with which it was equipped rotation-free in the above-mentioned arm head 18.

The 3rd power transfer axis 32 connected with the power transfer axis 31 of the above 2nd through the free joint 33 is provided in the position from the basis end to near the tip part of the above-mentioned wiper arm 22. The connection position of this free joint 33 is on the same extension as center of the rivet, which connects the above-mentioned arm head 18 and the wiper arm 22 rocking-free, and which is not illustrated.

Furthermore, inside the tip of the above-mentioned wiper arm 22, the 4th power transfer axis 34 is established rotation-free on the same axle of the 3rd power transfer axis 32 above mentioned, and between these 3rd power transfer axis 32 and the 4th power transfer axis 34, the clutch mechanism in which connection and interception of both are performed is established.

This clutch mechanism is constituted of the clutch ring 35 attached in the end part of the power transfer axis 34 of the above 4th sliding-free along the direction of an axis through the key (or spline) 37, and the electromagnetism solenoid 36 which meshes the clutch ring 35 by sliding to the key (or spline) 38 formed at the tip part of the 3rd power transfer axis 32 above-mentioned, and which cancels the mesh.

The umbrella gear 39 is fixed to one by the other ends of the 4th power transfer axis 34 above mentioned, and the umbrella gear 40 prepared as meshed this umbrella gear 39 is fixed to the axis of rotation 41 provided with by penetrating the tip part of the above-mentioned wiper arm 22.

A maintenance means 42 by which the eradication object 6 is attached is fixed to the end by the side of the exterior of this axis of rotation 41 rotation-free with the bolt nut 43.

Moreover, on the above-mentioned axis of rotation 41, the fixing non-truth circular-like board, to restrain rotation of this axis of rotation 41, i.e., rotation of the eradication object 6 attached in this axis of rotation 41 through the above-mentioned maintenance means 42, and to fix this eradication object 6 to a predetermined position to the above-mentioned wiper arm 22, and the fixing pin 45 of the type of ⊐ which puts this fixing board 44 and fixes an eradication object are provided.

On the other hand, the operation rod R, which constitutes clutch mechanism which is engaged to the above-mentioned clutch ring 35 in the direction of an axis in the state of rotation of the circumference of the axis is permitted, is connected with the movable child of the above-mentioned electromagnetism solenoid 36 at one, and the fixed pin 45, which restrains the rotation of the above-mentioned axis of rotation 41 by escaped to the above-mentioned fixing plate 44 when the operation rod R was slid by the above-mentioned electromagnetism solenoid 36, or which cancels the restraint, is provided at the tip of this operation rod R at one.

Moreover, on the above-mentioned worm wheel 27, in order to make it suspend the eradication object 6 in the abbreviation level state when the wiper arm 22 is contained, the position stop switch which is not illustrated is formed, and the gear ratio is further constituted so that one rotation of the worm wheel 27 may be equivalent to one rotation of an eradication object.

In the wiper equipment constituted thus, in the case of usual rain, the clutch ring 35 is separated from the 3rd power transfer axis 32 by the operation of electromagnetism solenoid 36, connection on a motor 25 and the eradication object 6 is canceled, and by being made for the fixed pin 45 prepared in the operation rod R to be engaged to the fixing board 44, the eradication object 6 is fixed by the predetermined position relation to the wiper arm 22.

In this state, by making the wiper arm 22 carry out both-way rocking by the motor which is not illustrated, wiper equipment functions as a both-way rocking formula wiper, and rain eradication is performed.

And when the limit of the eradication capability of a both-way rocking formula wiper is exceeded with violent rain and reservation of a field of view becomes difficult, by stopping the wiper arm 22 in a predetermined position and operating the electromagnetism solenoid 36 to an opposite direction, the above-mentioned clutch ring 35 is meshed to the 3rd power transfer axis 32 with the operation rod R, and engagement to the fixed pin 45 and the fixed board 44 is canceled

From this, by driving the motor 25 of the 2nd drive mea ns, the eradication object 6 can be rotated at high speed, er adication removal of the violent rain can be carried out from window glass, and a field of view can be secured.

The next, the both-way rocking formula wiper which is the 3rd operation form of this following invention is to make the number of times of both-way rocking per unit time increase, it is mentioned that, for instance, that is by making the number of rotations of a motor variable, however, the explanation based on the drawing as a case of the operation is omitted.

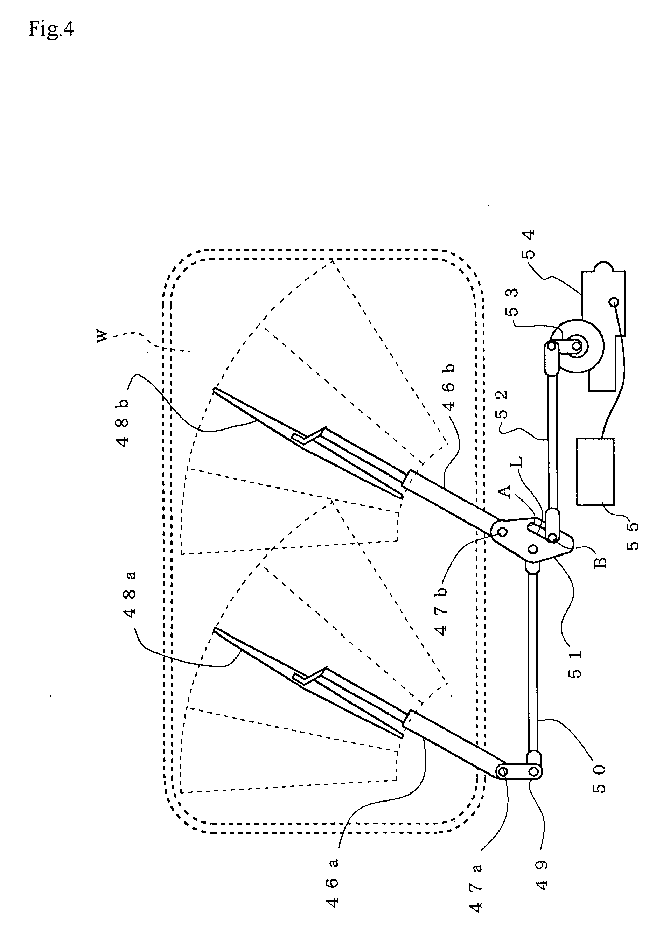

Below, the 4th operation form of this invention is explained based on Fig. 4 - 13.

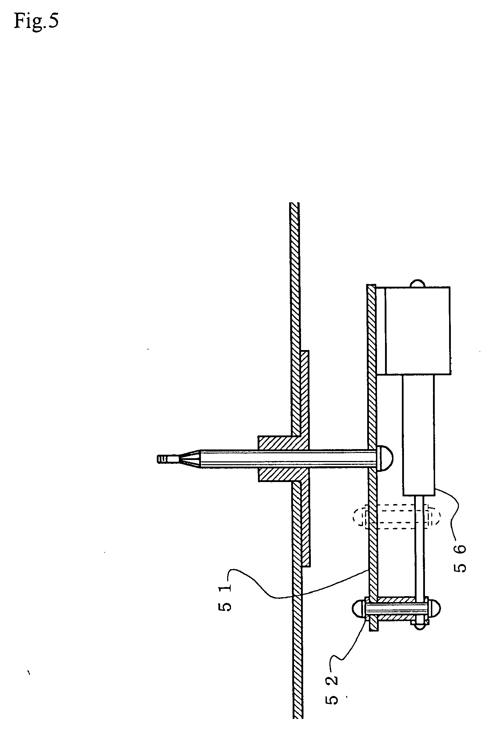

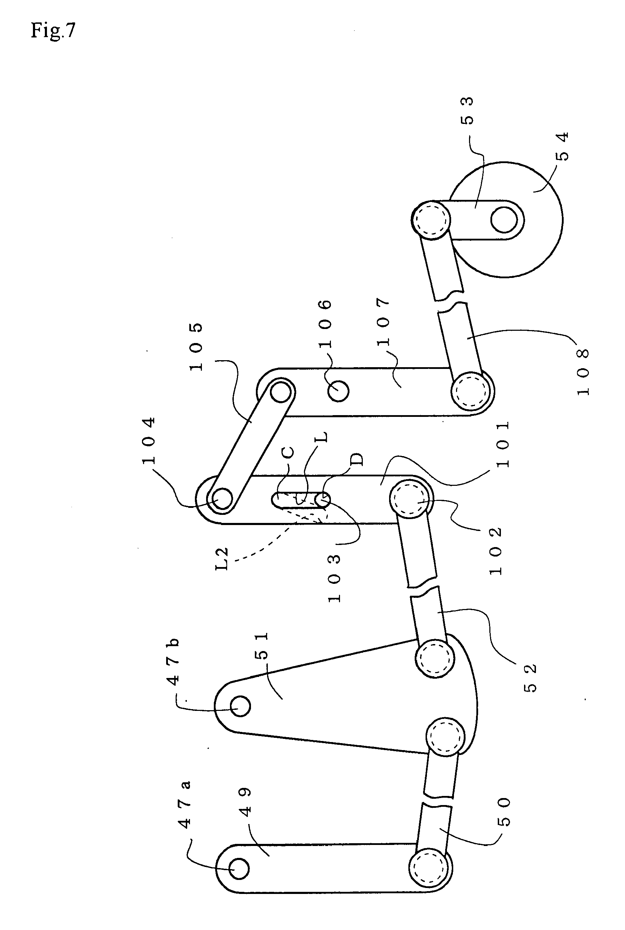

Fig. 4 is the whole outline view and Fig. 5 - 6 are sectional views showing the adjustment means of the both-way rocking range in a link plate part. Fig. 7 - 13 are the plane views and sectional views showing the adjustment means of the both-way rocking range in a link rod part.

Below, the example of the adjustment means of the both-way rocking range in a link plate part is explained.

In the view 4, Marks 46a and 46b are the wiper arms of the both-way rocking formula wiper which rotates the predetermined range centering on the pivot axes 47a and 47b, and the eradication objects 48a and 48b are held at the tip part of these wiper arms 46a and 46b.

The link plate 49 is attached in above-mentioned pivot axis 47a rotation-free, the end of the link rod 50 is connected with this link plate 49 rotation-free, the other ends of the link rod 50 are connected rotation-free with the link plate 51 attached in the above-mentioned pivot axis 47b rotation-free, the link rod 52 made to carry out both-way movement by the motor 54 as a drive means is connected with this link plate 51.

Moreover, the long hole L formed along the direction which keeps away from pivot axis 47b which takes the rotation lead in the above-mentioned link plate 51 is formed in the connecting point with the above-mentioned link rod 52 of the above-mentioned link plate 51, the end part of this link rod 52 is made to carry out relative movement from A positions close to the above-mentioned pivot axis 47b to B positions estranged most by connecting the end part of the above-mentioned link rod 52 with this long hole L slidable.

And a rotation angle of the above-mentioned link plate 51, i.e., the moving range of eradication object 48a and 48b, is made to change by changing the distance between the above-mentioned connecting point and pivot axis 47b which is the center of rotation of the link plate 51.

The other ends of the above-mentioned link rod 52 are connected with the crank arm 53 by which a rotation drive is carried out by the above-mentioned motor 54, and this crank arm 53 is connected to the above-mentioned motor 54 through the slowdown mechanism which consists of worm which is not illustrated, a worm wheel, etc.

Moreover, the rotation speed of a motor 54 is set up so that the control device 55 may control it.

On the other hand, a change of the position of the connecting point of the above-mentioned link plate 51 and the link rod 52 is made by the operation of the electric cylinder 56 infixed between the above-mentioned link plate 51 and the end part of the link rod 52 as shown in Fig. 5, and it is set up so that a position change may be made, from point A to point B, or from point B to point A.

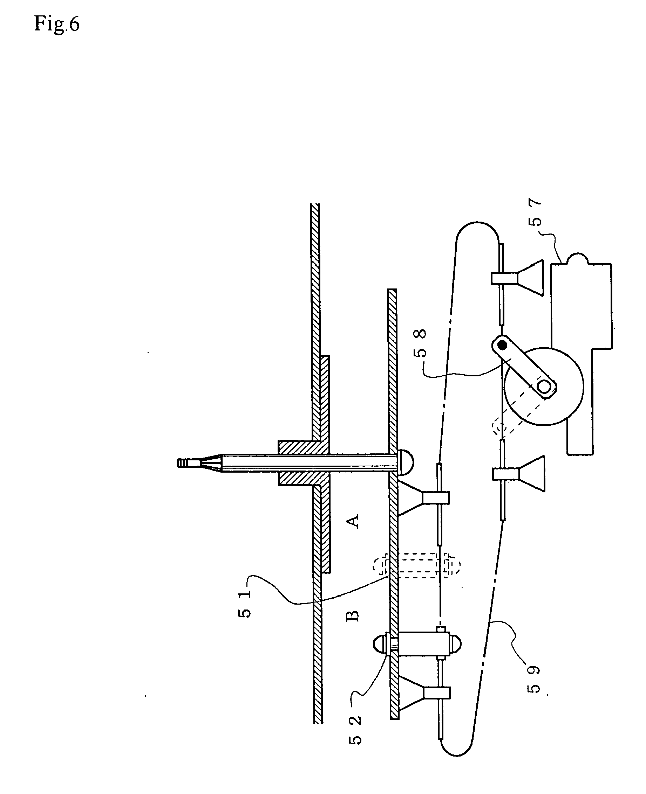

Moreover, as other structures of changing the position of the connecting point of the above-mentioned link plate 51 and the link rod 52, as shown in Fig. 6, there is structure that the rocking arm 58 is attached to the motor 57 through the slowdown mechanism (illustration abbreviation) which consists of worms, worm wheels, etc., and while fixing the rocking end of this rocking arm 58 to the annular flexible cable 59, the end part of the above-mentioned link rod 52 is fixed to other portions of this flexible cable 59.

And on this structure, the position of the connecting point of the above-mentioned link plate 51 and the link rod 52 changes from point A to point B, or from point B to point A, by making the above-mentioned rocking arm 58 move reciprocately in the range of a predetermined angle by normal rotation and an inversion of a motor 57, and making this reciprocating movement transmit to the flexible cable 59.

Below, the example of structure in the case of making the reciprocating-movement range change in a link rod part is explained.

Marks 47a and 47b are pivot axes, the link plates 49 and 51 with which a wiper arm is fixed are connected with these pivot axes 47a and 47b rotation-free, these link plates 49 and 51 are connected with the link rod 50, and the link plate 51 is connected with the link rod 52.

This link rod 52 is connected with the rod 101 which changes the reciprocating-movement range of eradication object 48a and 48b through the connection axis 102.

Namely, the above-mentioned rod 101 is attached rotation-free centering on an axis 103, the other end is connected with the rod 105 through the connection axis 104, the long hole L which met in the length direction is formed in the above-mentioned rod 101, and it is set up so that a rod 101 slides along the above-mentioned long hole L and the rocking center position set up with the above-mentioned axis 103 becomes variable from point C to point D or from point D to point C. That is, its mechanism is so that the distance of a fulcrum and the connection axis of both ends is valuable.

Moreover, the end part of the above-mentioned rod 105 is connected with the end part of other rods 107, and further, while this rod 107 is attached rotation-free centering on the axis 106, the other end is connected with the end part of the link rod 108.

And the other ends of the above-mentioned link rod 108 are connected rotation-free with the crank arm 53 by which a rotation drive is carried out by the motor 54 through the slowdown mechanism which consists of worms and worm wheels which are not illustrated.

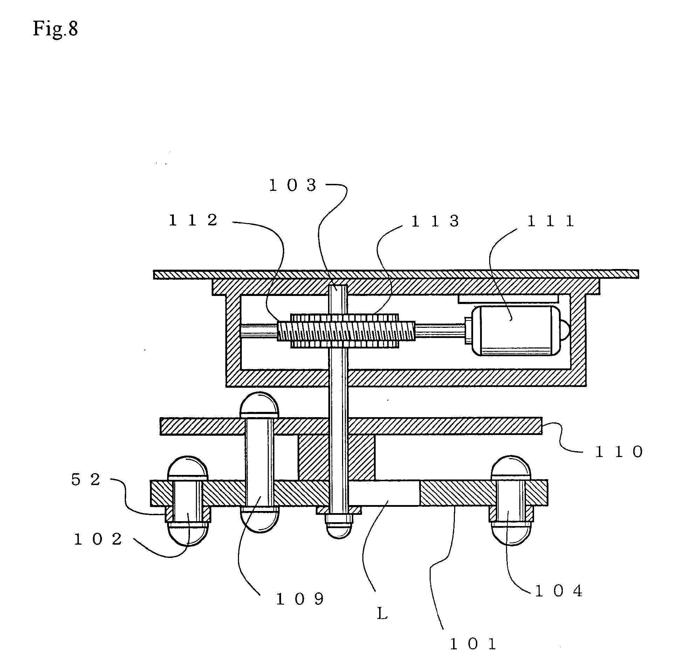

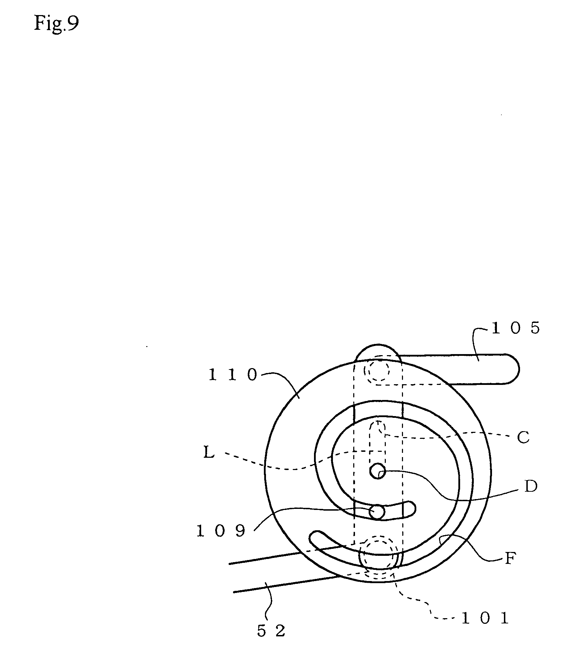

On the other hand, as shown in Fig. 8 and Fig. 9, the axis 109 is being fixed to the above-mentioned rod 101, and opposite arrangement of the cam plate 110, setting a predetermined interval to the rod 101, is carried out.

This cam plate 110 is fixed to the above-mentioned axis 103 on the same axle while the swirl-like cam slot F is formed on it and connected with the motor 111 through the worm wheel 113 currently fixed to this axis 103 and worm 112 meshed with the worm wheel 113, and the above-mentioned axis 109 is made to fit in sliding-free by the above-mentioned cam slot F which is formed on this cam plate 110.

Moreover, when changing the rocking center of a rod 101 from point D to point C, it is carried out by making the cam plate 110 carry out one revolution in the counterclockwise direction, and change from point C to point D is carried out by making the cam plate 110 carry out one revolution in the clockwise direction.

Thus, the rocking angle of the above-mentioned link plates 49 and 51, i.e., the rocking range of eradication objects 48a and 48b, is changed by changing the rocking center position of the rod 101.

Moreover, the position stop switch which is not illustrated is formed in the worm wheel 113, and it is set up so that the cam plate 110 may rotate to a predetermined position in the clockwise or counterclockwise direction by normal rotation and inversion of a motor.

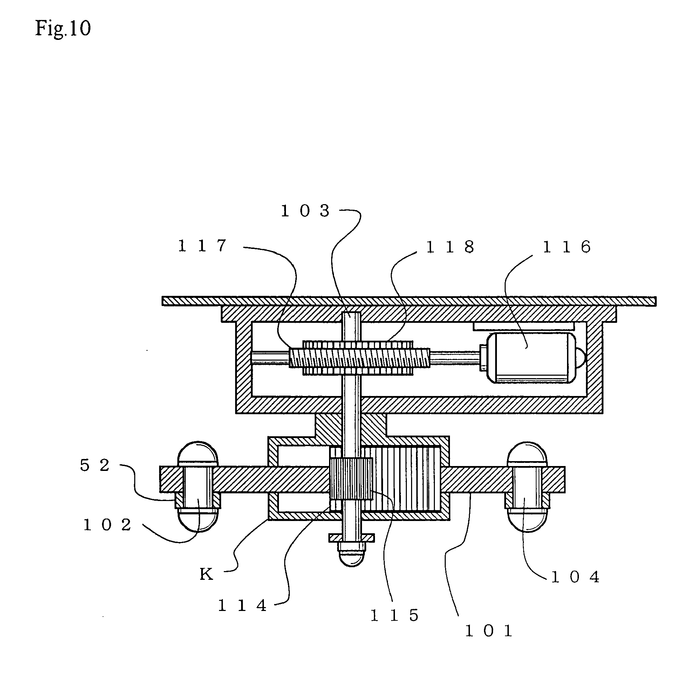

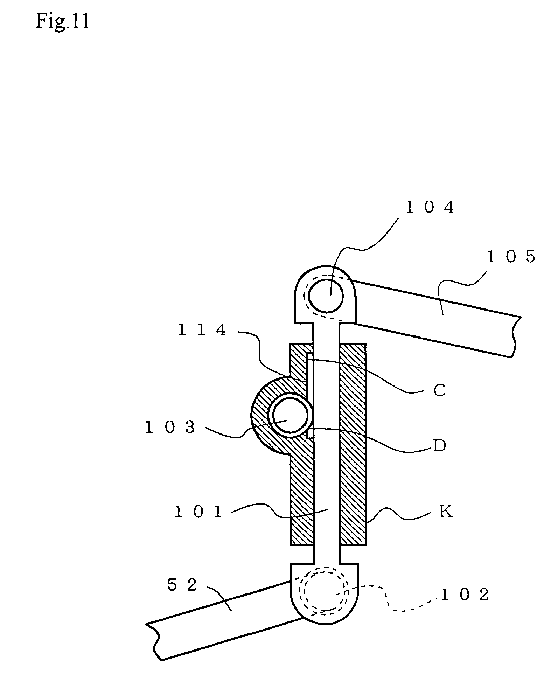

Furthermore, other structures for making the rocking po sition of the above-mentioned rod 101 change are shown in Fig. 10 and 11.

This structure replaces with the cam plate 110 and axis 109 which were mentioned above, and a rack and pinion are used for them.

That is, this is composed so that, while rack 114 is formed in the above-mentioned rod 101, as this rack 114 is surrounded, casing K is attached in the length direction of the above-mentioned rod 101 sliding-free, the above-mentioned axis 103 penetrates and is attached in this casing K possible to rotate, and pinion 115 which is meshed by the above-mentioned rack 114 is formed on the axis 103.

Then, the worm wheel 118 is fixed to one by the above-mentioned axis 103, worm 117 gears on this worm wheel 118, the motor 116 is further connected with this worm 117, and the rocking center of this rod 101 is changed from point D to point C or from point C to point D by moving a rack 114 , i.e., a rod 101, in the direction of straight side with rotation of an axis 103.

Moreover, the position stop switch which is not illustrated is formed in the worm wheel 118, and it has set up so that a rack 114 may slide by normal rotation and inversion of a motor 116.

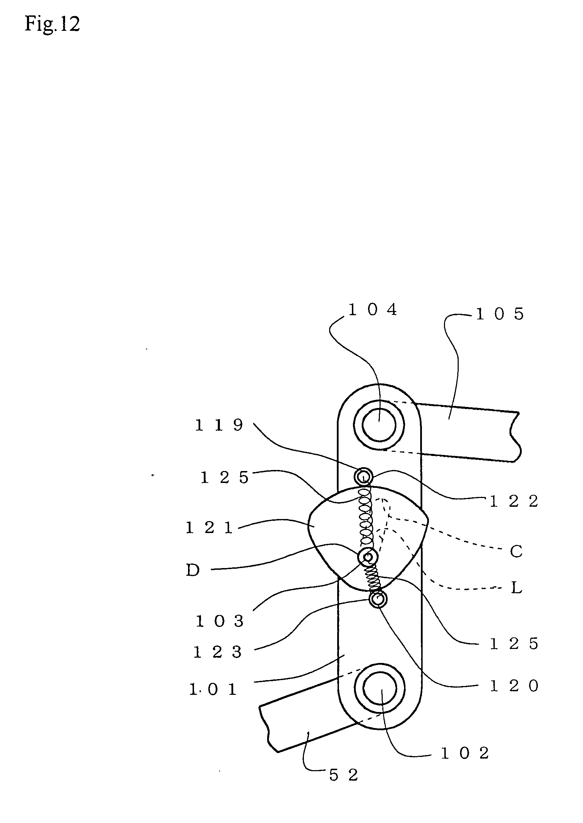

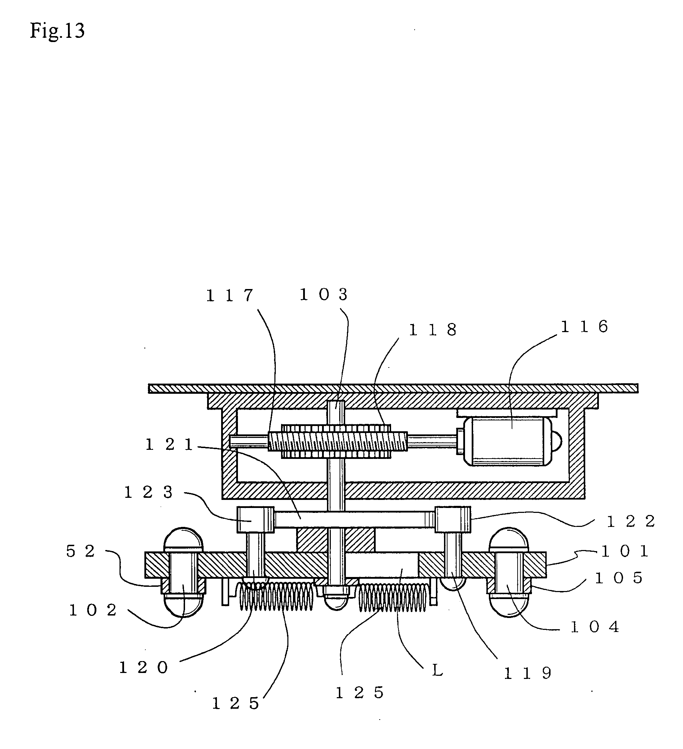

As further modification for changing the rocking position of the above-mentioned rod 101, the structure shown in Fig. 12 and 13 can be considered.

This structure replaces with the cam plate 110 of the shape of a swirl mentioned above, and the circle cam 121 is used for it.

That is, the composition is so that, the circle cam 121 is attached in the above-mentioned axis 103 at one and arranges so that a predetermined interval to the above-mentioned rod 101 and may be made to set and superimpose, a pair of support axes 119 and 120 parallel to the above-mentioned axis 103 are protruded on a position which puts the above-mentioned circle cam 121 of the above-mentioned rod 101, cam follower 122 and 123 currently contacted to the cam side of the above-mentioned circle cam 121 are attached rotation-free in the tip part of these support axes 119 and 120, and the spring 125 for making each above-mentioned cam follower 122 and 123 contact in elasticity to the above-mentioned cam side is formed between each above-mentioned support axis 119 and 120 and the above-mentioned axes 103.

In such composition, changing the rocking center of the above-mentioned rod 101 into point C from point D is performed, when 180 degrees of circle cams 121 are rotated by a clockwise rotation or the counterclockwise rotation, and changing it into point D from point C is performed when the circle cam 121 is rotated by 180 more degree clockwise rotation or the counterclockwise rotation.

Moreover, the position stop switch which is not illustrated is formed in the worm wheel 118, and the above-mentioned circle cam 121 is made to be rotated to a predetermined position by the right inversion of a motor 116.

Thus, if it is in the wiper equipment concerning this constituted enforcement form, in the case of usual rain, it is used in the usual both-way rocking range.

That is, the position of the connecting point in a link plate part is made into point A, or the fulcrum in a link rod part is made into point C, and eradication removal of the rain is carried out, carrying out both-way rocking of wiper arm 46a and the 46b.

And when the limit of the eradication capability of a both-way rocking formula wiper is exceeded with violent rain and reservation of a field of view becomes difficult, while changing the connecting point in a link plate part into point B, or changing the fulcrum in a link rod part into point D and decreasing the both-way rocking range, by making the number of rotations of the above-mentioned motor 54 increase, it is possible to make the number of times of both-way rocking of eradication object 48a and 48b increase, and to heighten eradication capability.

In addition, forms, sizes, etc. of each component shown in each above-mentioned enforcement are an example and can be variously changed based on a design demand etc.

For example, the both-way rocking position of eradication object 48a and 48b in the enforcement form of the above 4th can be shifted in the direction of a field of window glass in the state where the eradication range was maintained, by shifting the connection position B of the above-mentioned link rod 52 and the link plate 51 to the circumference of the above-mentioned pivot axis 47b.

That is, an eradication position can be shifted to a driver's seat side by shifting the above-mentioned connection position B clockwise in Fig. 4. Moreover, in the composition shown in Fig. 7, the eradication position mentioned above can be shifted to a driver's seat side by considering as the long hole L2 which made the long hole L incline to the line which ties the connection axis 102 and the connection axis 104 as chain line shows.

Next the concrete example of an experiment is given and this invention is explained further in full detail.

The following examinations were carried out in order to check the effect of this invention.

### Examination conditions and the evaluation method Rainmaking

The nozzle for artificial rainmaking was prepared in the position about 2m above ground, the hose was connected to this, tap water was sprayed on the window glass of a car, and rainmaking was made to fall.

A nozzle attaches a micro screen with a caliber of 0.25mm, and it was made to come down using a shower-like nozzle [the Takagi nozzle six P], making the rate of a opening adjust and rock.

### Precipitation

The container of 180mm of diameters of inner received the artificial rain which falls on the window glass of a car, the precipitation (ml / min) was measured with the graduated cylinder, and it converted into the precipitation (mm/h).

### Number of rotations

The number of rotations (rpm) of an eradication object was measured using the rotation meter [manufactured by Yokogawa Electric Instruments Inc.] of a non-contacting formula.

### Artificial wind

In order to see the influence of the wind at the time of a run, the compressed air of 0.5MPa (5 kg/cm²) was injected on window glass by flux about 200 L/min using the air duster with a caliber of 2.0mm, and the influence to the degree of fluoroscopy was evaluated.

### Wind velocity

The wind velocity (m/sec) of the field where an artificial wind hits window glass was measured using the anemometer [Anemomaster manufactured by Japanese Science Industry Inc.]. The degree of fluoroscopy (the evaluation method)

Four persons' panelist (three men, one woman) estimated whether the traffic-sign-painted-on-the-road line (white line with a width of 150mm) of 50m beyond looks clear from the driver' s seat of a car, and the next sign showed.
○ : A traffic-sign-painted-on-the-road line can check vividly.
Δ : A traffic-sign-painted-on-the-road line can check slightly.
× : A traffic-sign-painted-on-the-road line cannot be checked.

### (Example 1 of an examination)

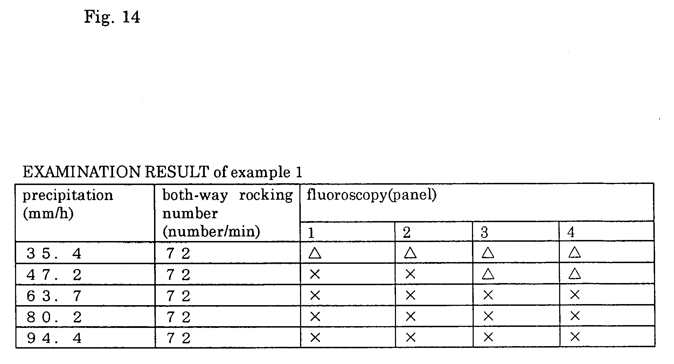

Using the both-way rocking formula wiper of a car, it evaluates about the relation of the number of times of both-way rocking, precipitation, and the degree of fluoroscopy, and the result is shown in Fig. 14.

### (Example 2 of an examination)

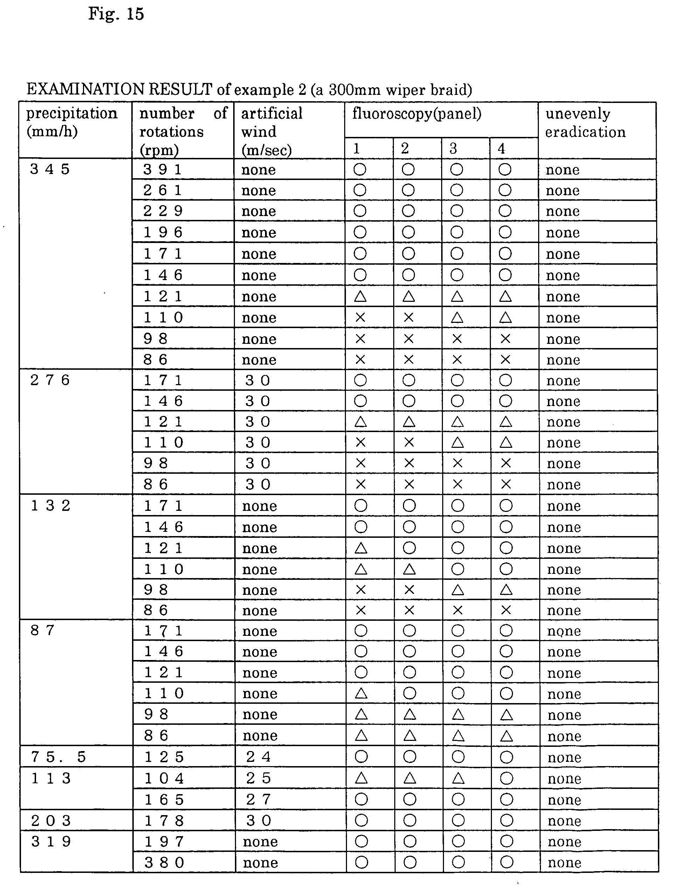

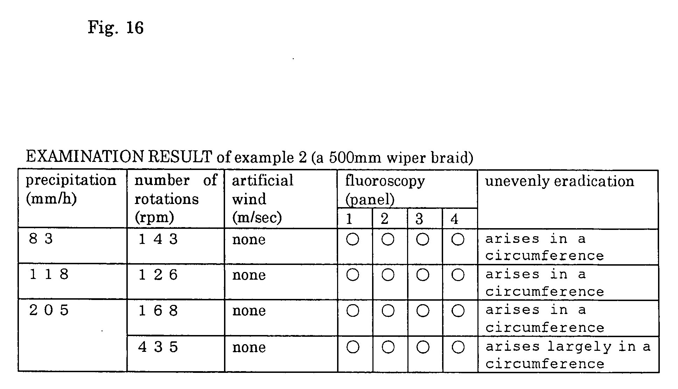

The trial production equipment of a rotation formula wiper is attached in the window glass of a car, it evaluates on it about the relation of the number of rotations of a wiper braid, precipitation, and the degree of fluoroscopy, and the result is shown in it in Fig. 15 and 16.

In addition, the trial production equipment of a rotation formula wiper carried out cutting removal of the tip of a commercial wiper arm, attached it here of a synchronization pulley free rotation, and fixed the commercial wiper braid holder at the tip of center of this synchronization pulley rotation free with the bolt nut, it was made to hold of a wiper braid rotation free in this wiper braid holder, and where this wiper arm is opened to 90 degrees, it fixed it to the pivot axis.

A motor for a drive of exchange 100V and 40W, 1500rpm was used, and the slowdown machine was attached in this, the synchronization pulley was fixed to the output axis of this slowdown machine, and the wiper braid was rotated with the synchronization belt. Change of number of rotations was performed by changing the size of each synchronization pulley and adjusting voltage using a single volume sliding transformer.

In addition, as a commercial wiper braid, two sorts, 300mm and 500mm, were used.

### (Example 3 of an examination)

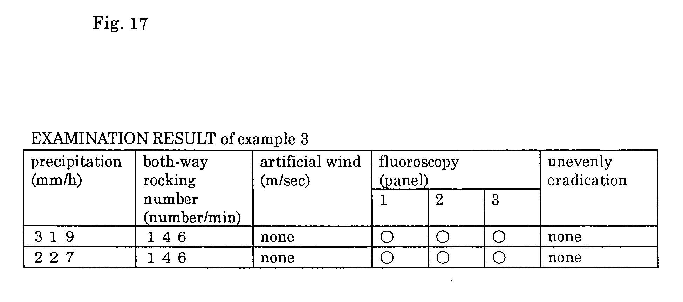

Using a car, the position of the connection axis of a link plate and a link rod is made long 2.4 times, furthermore, two batteries of 12V are connected in series, it is made the voltage of 24V, and a wiper motor is rotated, It evaluates about the relation of the number of times of both-way rocking, precipitation, and the degree of fluoroscopy, the result is shown in Fig. 17.

In addition, change of the position of the connection axis of a link plate and a link rod carried out cutting removal of the partition of the storage space of a wiper linkage mechanism, and an engine room by the grinder, fixed the auxiliary link plate to the link plate with the bolt nut, and it prepared the connection axis in one 2.4 times the position of this so that a both-way rocking angle might turn into about 45 degrees at this auxiliary link plate.

With the both-way rocking formula wiper, that the degree of fluoroscopy falls in about 50mm of precipitation, and reservation of a field of view becomes impossible understood so that clearly from Fig. 14 or 7th.

On the other hand, with the rotation formula wiper, when number of rotations was about 140 or more rpm, regardless of precipitation, the degree of fluoroscopy was improved even in violent rain [200-350mm ], and the field of view has secured it vividly.

However, it turns out that when the number of rotation is in 80-140rpm, since reservation of a field of view is influenced with number of rotations and precipitation, clear judgement is difficult, but, when precipitation is 100-200mm, a field of view can be secured in 110-140rpm, and when precipitation is 50-100mm, a field of view can be secured in 80-110rpm.

Moreover, it turns out that most influences of a wind are not perceived.

Furthermore, it turns out that the unevenly eradication is influenced by the size of a wiper braid, it is not produced in 300mm even when it rotates at high speed, however in 500mm, the unevenly eradication arises in a circumference and it becomes larger as it rotates at high speed.

However, the field of view of the range which does not have trouble in operation in the central part was securable.

On the other hand, with the both-way rocking formula wiper, in the case that the both-way rocking angle was decreased at about 45 degrees and the number of times of both-way rocking increases to 146 times per for 1 minute, the degree of fluoroscopy of violent rain whose precipitation is 230-320mm improved, and the field of view has secured vividly.

### INDUSRIAL APPLICABILITY

As mentioned above, according to this invention, under any rain conditions from a light rain to violent rain, eradication removal of the rain can be carried out good from window glass, the degree of fluoroscopy can be raised, and a driver's field of view can be secured. By this, a driver's uneasiness can be removed and safety can be raised.

## Claims

1. A both way rocking formula wiper apparatus for wiping rain from a window glass of a vehicle,
**characterized by** comprising:
a variable means for changing the frequency of both-way rocking of said both-way rocking formula wiper per hour;
a rocking-range-adjustment means which decreases or increases the rocking range of said both-way rocking formula wiper; wherein
said both-way rocking formula wiper has a wiper arm (46b), a link plate (51) that is connected at the base of the wiper arm (46b), and a link rod (52) that connects a crank arm (53), that moves said wiper arm (46b) right and left with said link plate (51); and
said rocking-range-adjustment means is connected with said link rod (52) and said crank arm (53), and is a rod (101), that can freely rotate around an axis (103); and
by changing the position of the axis (103), that is the rocking center position of the rod (101), the rocking angle of the link plate (51) is changed and the rocking range of said rocking formula wiper is changed.

2. The wiper apparatus in accordance with claim 1
**characterized in**
**that** a rod is linked to said link rod (52) through a connecting pin, and said rocking-range-adjustment means (101) is located on the rod, and this rocking-range-adjustment means (101) changes the distance between rocking fulcrum position of said rod and connecting portion of the rod on both ends.

3. The wiper apparatus in accordance with claim 1,
**characterized in**
**that** a rod is linked to said link rod (52) through a connecting pin, and a long hole is formed in the lengthwise direction of the rod, and said rocking-range-adjustment means (101) is located on the long hole and supported such that it can slide, and said rocking-range-adjustment means (101) changes rocking fulcrum position of said rod along said long hole.

4. A wiping method comprising a both-way rocking formula wiper for wiping rain from a window glass of a vehicle,
**characterized by** comprising:
a variable means for changing the frequency of both-way rocking of said both-way rocking formula wiper per hour;
a rocking-range-adjustment means which decreases or increases the rocking range of said both-way rocking formula wiper; wherein
when the amount of rainfall exceed approximately 50 mm per hour,
the rocking range of said both-way rocking-formula wiper is reduced by said rocking range-adjustment means, as well as both-way rocking frequency of said both-way rocking wiper is increased to 80 to 1000 times so that said both-way rocking speed of said both-way rocking formula wiper maintains the approximately same speed.

5. A both-way rocking-formula wiper apparatus for wiping rain from a window glass of a vehicle
**characterized by** comprising:
a variable means for changing the frequency of both-way rocking of said both-way rocking formula wiper per hour;
a rocking-range-adjustment means which decreases or increases the rocking range of said both-way rocking-formula wiper; wherein
said both-way rocking formula wiper has a wiper arm (46b) and a link plate (51) that is connected to the base of wiper arm (46b), and a link rod (52) that connects a crank arm (53), that moves said wiper arm (46b) right and left with said link plate (51); and
said rocking-range-adjustment means is the link plate (51) that is connected to a pivot axis (47b) so that it rotates freely, and
a long hole L is formed in said link plate (51) in the position of the connecting point where it connects with said link rod (52) along the direction going away from the pivot axis (47b) which is the center of rotation of said link plate (51), and one end of said link rod (52) is connected with this long hole L; and
the angle of rotation of said link plate (51) is changed by changing the distance between said connection point and said pivot axis (47b) which is the center of rotation of said link plate (51) then the rocking range of rocking-type wipers are changed.
